# EUROPEAN PATENT APPLICATION

(11) **EP 3 072 822 A1**
(43) Date of publication of application: **28.09.2016**
(21) Application number: 15200092.3
(22) Date of filing: 15.12.2015
(51) Int. Cl.: B65C 9/00, B31D 1/02

(54) **DEBRIS SEPARATOR FOR LABEL TAPE**

(30) Priority: 26.03.2015 JP 2015065012
(71) Applicant: Oki Data Corporation, Tokyo 108-8551 (JP)
(72) Inventor: IGARI, Yoshifumi, Tokyo, 108-8551 (JP)
(74) Representative: Piotrowicz, Pawel Jan Andrzej

(57) **Abstract**

A debris separator pre-separates debris from a label tape (8), the label tape including a carrier web (9) and a label material, the label material being half cut into labels and debris (11) that surround all around individual labels (10). The label tape (8) is transported in a path (36). A first roller is disposed in the path (36), extends in a direction, and is covered with an elastic member. A second roller is disposed in the path (36), extends parallel to the first roller, and includes elastic members (35) angularly disposed on the second roller. The elastic members have circumferential surfaces. A controller controls the first and second rotatable bodies. The first and second rollers rotate with the label tape (8) sandwiched between their circumferential surfaces, the second circumferential surface digging into the first circumferential surface and the first circumferential surface pushing back the debris to detach the debris at least partially from the web.

## Description

### BACKGROUND OF THE INVENTION

### FIELD OF THE INVENTION

The present invention generally relates to a label separator and a label printing system.

### DESCRIPTION OF THE RELATED ART

A composite label tape is comprised of a carrier web and label material releasably adhered by an adhesive to the carrier web. The label material includes labels and residues or debris that surround each label. Each label is removed from the carrier web, leaving the surrounding residues on the web, and is applied to a product surface. Japanese Patent Publication No. 2006-181860 discloses one type of residue separator configured to separate the residue material from the carrier web. The apparatus comprises a mechanism which includes a separator member that peels the residues of the label material from the web. The separator member is effective in preventing the labels from being peeled together with the residue material.

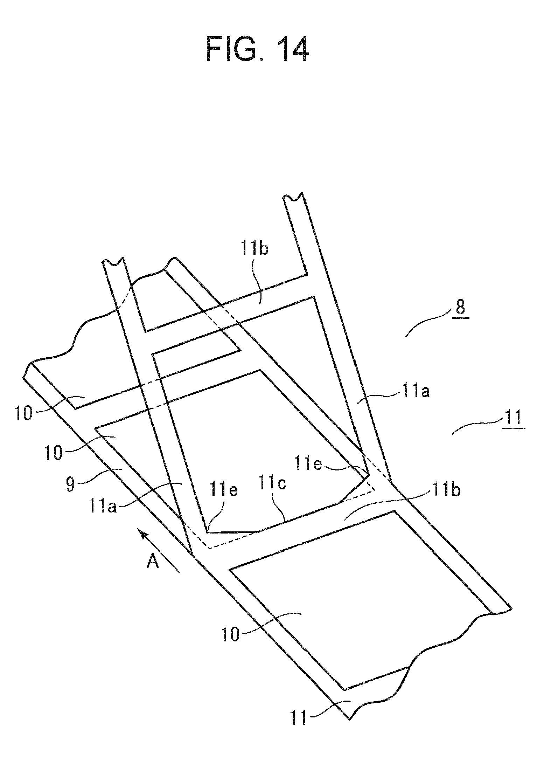

Fig. 14 illustrates the label tape when the residues are peeled. However, the apparatus suffers from the following drawbacks. The label tape includes a web 9, half cut labels 10 and a residue 11, which are attached on surface of the web 9 by means of an adhesive. The residues include a portion 11a that extends in a direction parallel to a direction in which the label tape is paid out. When the residues begin to be peeled off from the web 9, the portion 11a is first peeled substantially in the direction in which the label tape is paid out. A portion 11b extends substantially in a direction perpendicular to the residue 11a and begins to be peeled off at its longitudinal ends. When the portion 11b leaves the web 9, unpleasant noise occurs. If the portion 11 is strongly adheres to the web 9, the portion 11b may break at its middle portion 11c.

### SUMMARY OF THE INVENTION

The present invention was made to solve the drawbacks of conventional apparatus for removing residues of the label material of a half cut label tape.

An object of the invention is to provide a label separator and a label printing system that do not make unpleasant noise.

A debris separator pre-separates debris from a label tape (8), the label tape including a carrier web (9) and a label material, the label material being half cut into labels and debris (11) that surround all around individual labels (10). The label tape (8) is transported in a path (36). A first roller is disposed in the path (36), extends in a direction, and is covered with an elastic member. A second roller is disposed in the path (36), extends parallel to the first roller, and includes elastic members (35) angularly disposed on the second roller. The elastic members have circumferential surfaces. A controller controls the first and second rotatable bodies. The first and second rollers rotate with the label tape (8) sandwiched between their circumferential surfaces, the second circumferential surface digging into the first circumferential surface and the first circumferential surface pushing back the debris to detach the debris at least partially from the web.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and wherein:
Fig. 1 is a perspective view of a label printing system according to the present invention when a continuous label tape roll has not been loaded yet;
Fig. 2 is a top view as seen in a direction shown by arrow A in Fig. 1;
Fig. 3 is a front view as seen in a direction shown by arrow B in Fig. 1;
Fig. 4 is a perspective view of the label printing system when the label tape has been loaded;
Fig. 5 is a top view as seen in a direction shown by arrow D in Fig. 4;
Fig. 6 is a side view as seen in a direction shown by arrow E in Fig. 4;
Fig. 7A illustrates the pertinent portions of a pre-separation mechanism;
Fig. 7B illustrates an annulus sector;
Fig. 7C is a perspective view of a slit disc and a slit detector;
Fig. 7D is a top view as seen in a direction shown by arrow F in Fig. 7C;
Fig. 8A is a top view of the label tape;
Fig. 8B is a side view of the label tape when the label tape has been partially paid out;
Fig. 8C is a cross-sectional view taken along lines 8C-8C in Fig. 8A;
Fig. 9 illustrates the positional relationship between an upper roller assembly and a lower roller assembly when a mark line on the label tape has not been detected by the mark detector yet;
Fig. 10 illustrates the operation of the pre-separation mechanism;
Figs. 11A, 11B, and 12 illustrate elastic members of the lower roller assembly when the elastic member is pushed into the elastic member of the upper roller assembly;
Fig. 13 is an expanded view of a pertinent portion in the vicinity of a half cut line printed on the label tape; and
Fig. 14 illustrates a prior art label tape when residues are peeled from the label tape.

### DETAILED DESCRIPTION OF THE INVENTION

By way of preferred embodiments, the present invention will be described in detail with reference to the accompanying drawings.

### First Embodiment

The label tape according to the invention includes a web, a label material, and an adhesive in a laminated structure, the label material being adhered to the web by the adhesive.

The label material is a sheet, which is half cut to define labels and residues or peripheral portions, the residue surrounding each label. The residue includes portions 11a that extend in directions parallel to the direction in which the label tape advances, and portions 11b that extend in directions perpendicular to the portions 11a.

### {Configuration}

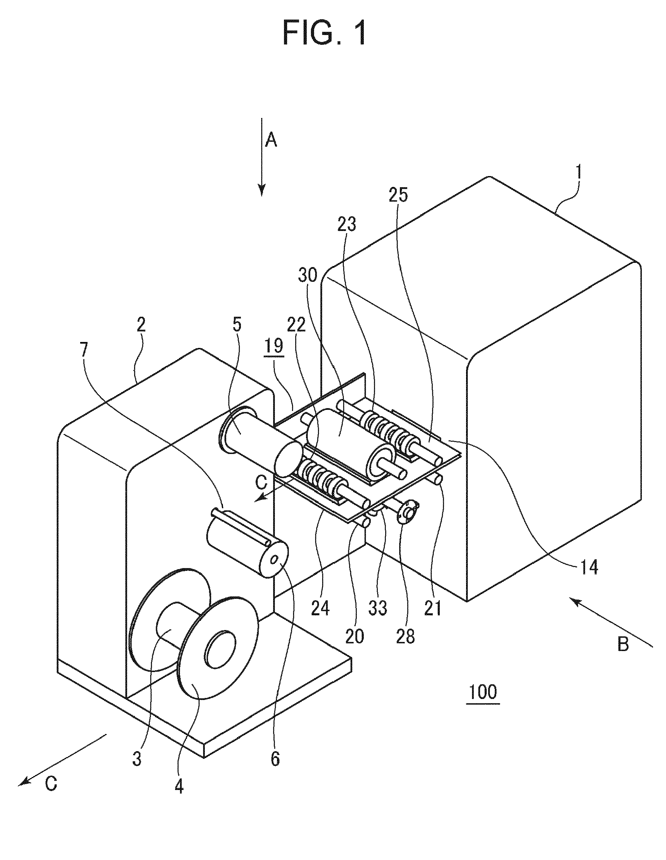

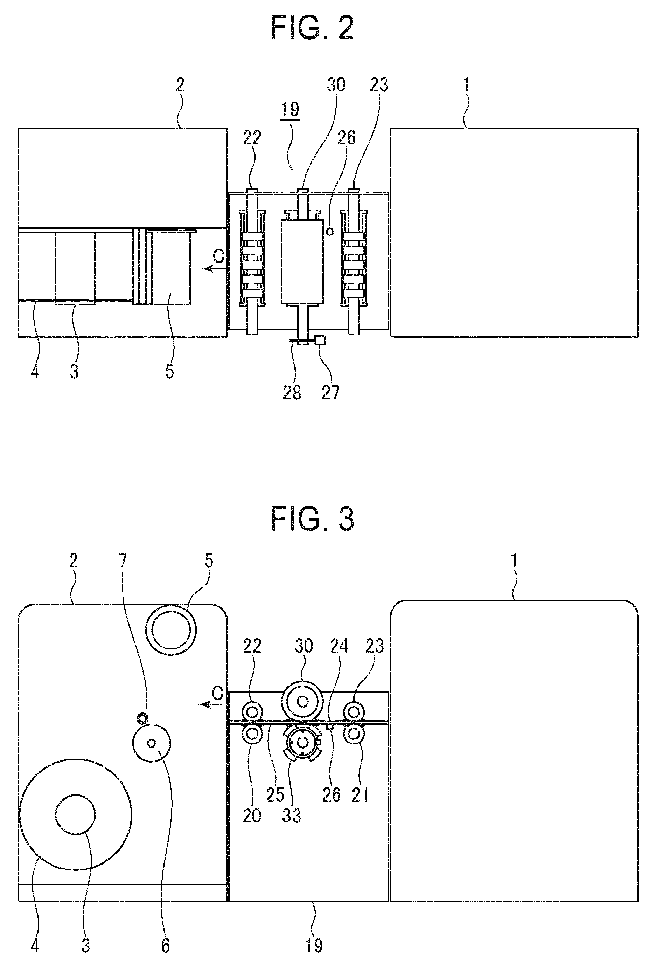

Fig. 1 is a perspective view of a label printing system 100 when the continuous label tape roll has not been loaded yet. Fig. 2 is a top view as seen in a direction shown by arrow A of Fig. 1. Fig. 3 is a front view as seen in a direction shown by arrow B. The label tape advances or is paid out in a direction shown by arrow C as shown in Fig. 1.

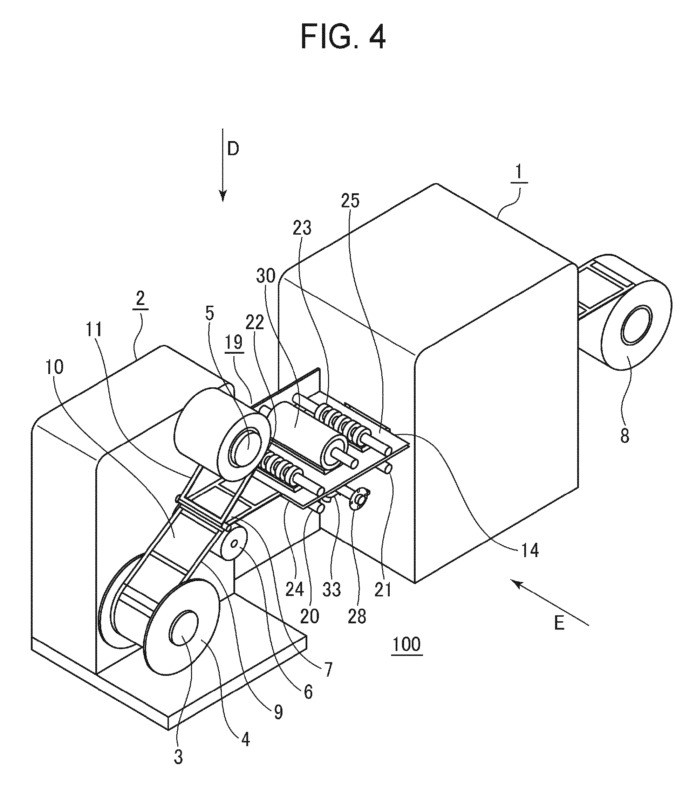

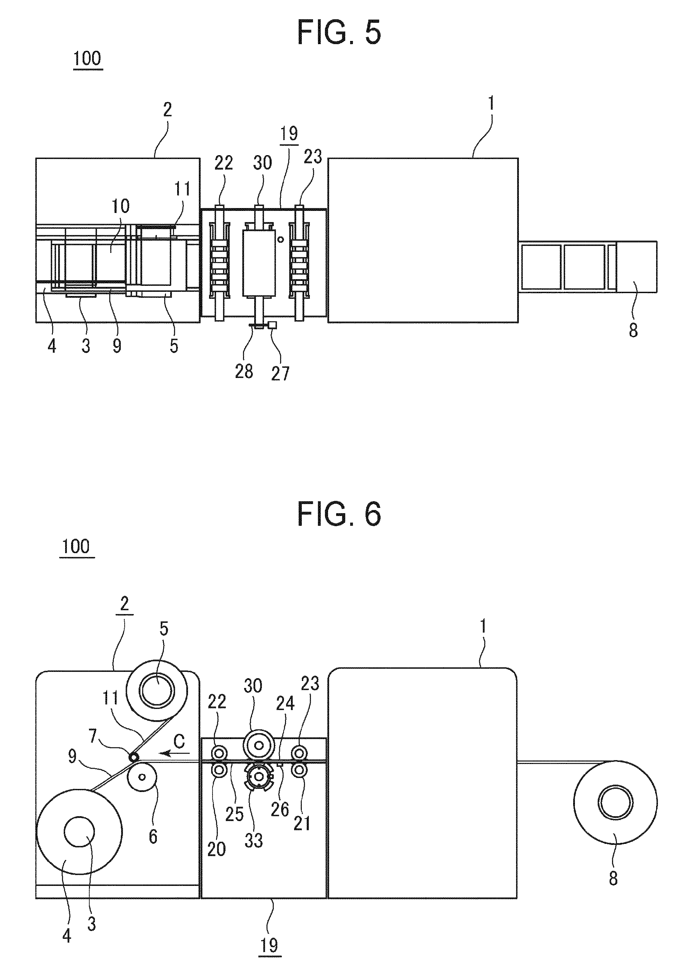

Fig. 4 is a perspective view of the label printing system 100 when the label tape 8 has been loaded. Fig. 5 is a top view as seen in a direction shown by arrow D of Fig. 4. Fig. 6 is a side view as seen in a direction shown by arrow E in Fig. 4.

Referring to Figs. 1 and 2-6, the label printing system 100 constitutes of a label printer 1 as a printing device, a pre-separation mechanism 19, and a post-separator 2.

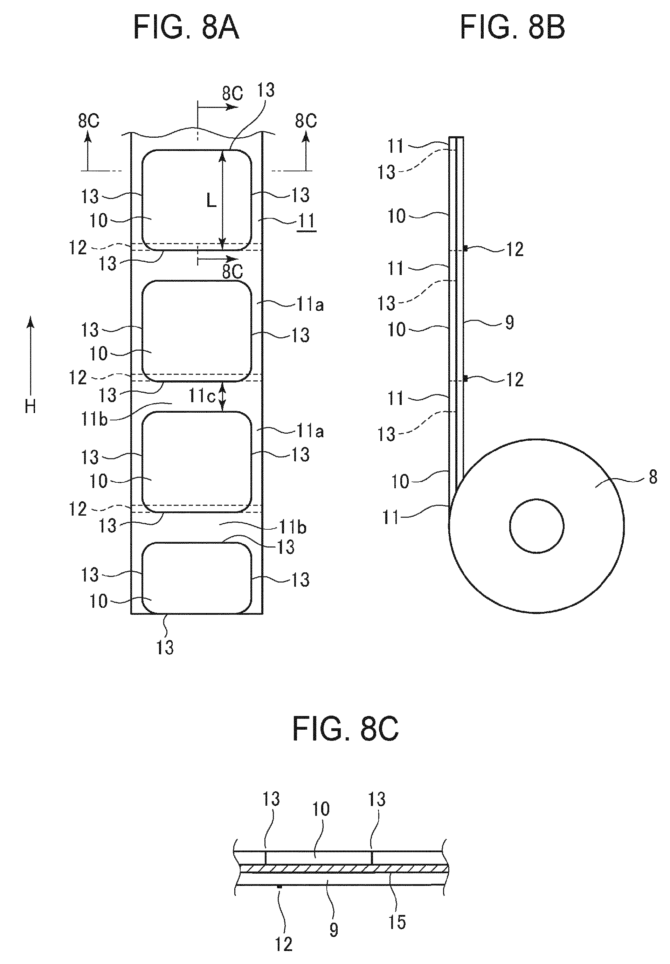

The label printing system 100 is configured to print on the label material releasably adhered to one side of the web by an adhesive (Fig. 8C).

The roll of label tape 8 is rotatably supported on the label printer 1 via a supporting mechanism (not shown). The label tape 8 is paid out from the roll, and information is then printed on the label material. The label printer 1 pays out the printed label tape 8 through an exist 14 (Figs. 1 and 4) to the pre-separation mechanism 19.

The pre-separation mechanism 19 is located between the label printer 1 and the post-separator 2, and is fixed to the printer 1 and the post-separator 2 by means of an appropriate means (not shown). The pre-separation mechanism 19 detaches the residues or debris 11b from the label tape 8, leaving the labels 10 behind and allowing the labels 10 to remain attached to the web 9 until the label tape 8 arrives at the post-separator 2.

A controller (not shown) sends command signals to the label printer 1 and the pre-separation mechanism 19 over cables, thereby driving the label printer 1 and the pre-separation mechanism 19 in synchronism. The pre-separation mechanism 19 drives its mechanical elements in accordance with the command signals, thereby properly transporting the label tape 8.

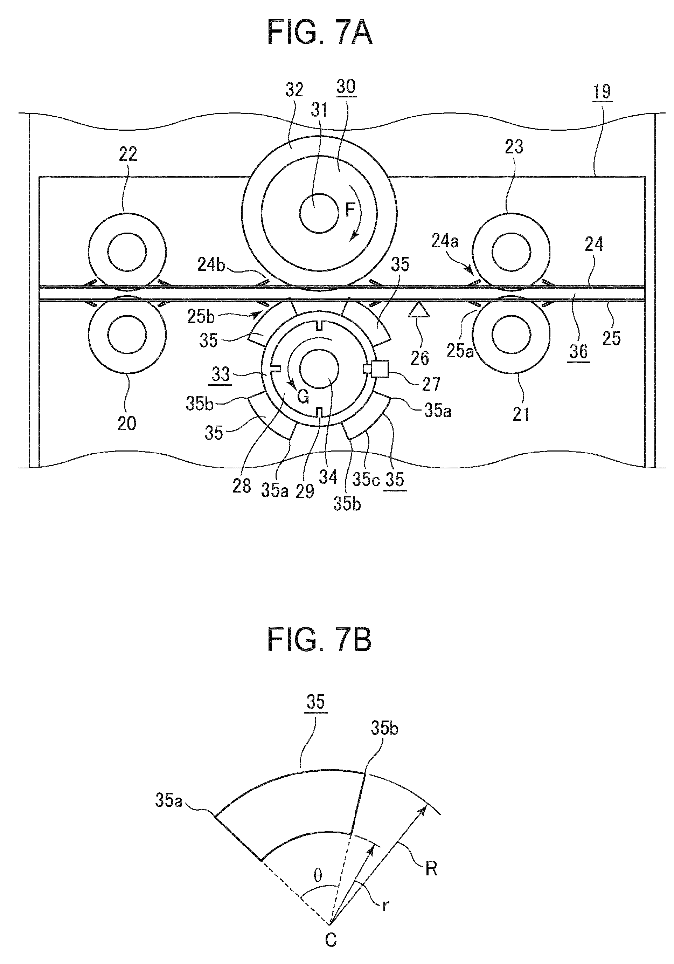

Fig. 7A illustrates the pertinent portions of the pre-separation mechanism 19. Fig. 7B illustrates an annulus sector. An upper guide 24 and a lower guide 25 are substantially in the shape of a narrow plate, and extend straightly from the printer 1 to the post-separator 2. The upper and lower guides 24 and 25 are supported on a frame (not shown) with a predetermined space therebetween to define a label path 36 through which the label tape 8 advances. The label path 36 has an entrance that opens to the label printer 1 and an exit that opens to the post-separator 2. Each of the upper and lower guides 24 and 25 has an opening 24a or 25a through which the upper or lower feed roller 23 or 21 partially enters the path 36. The opening is located upstream of the upper and lower roller assemblies 30 and 33.

A lower feed roller 21 and an upper feed roller 23 are disposed upstream of the upper and lower roller assemblies 30 and 33, and cooperate with each other to transport the label tape 8 sandwiched therebween toward the upper and lower roller assemblies 30 and 33. The lower feed roller 21 and the upper feed roller 23 partially enter the label path 36, and rotate each other to feed the label tape 8 to the upper and lower roller assemblies 30 and 33. The upper and lower feed rollers 23 and 21 each have a plurality of sub rollers as shown in Fig. 4. The lower feed roller 21 and upper feed roller 23 constitute an upstream feed roller pair. An upper feed roller 22 and a lower feed roller 20 are disposed downstream of the upper and lower roller assemblies 30 and 33, and cooperate with each other to transport the label tape 8 sandwiched therebetween. The upper and lower feed rollers 22 and 20 each have a plurality of sub rollers as shown in Fig. 4. The upper feed roller 22 and lower feed roller 20 constitute a downstream feed roller pair. Each of the upper and lower guides 24 and 25 has an opening 24b or 25b through which the upper or lower feed roller 23 or 21 partially enters the path 36, the opening 24b or 25b being located downstream of the upper and lower roller assemblies 30 and 33. The upper feed roller 22 and the lower feed roller 20 partially enter the label path 36 and rotate to feed the label tape 8. When the label tape 8 passes through the gap between the upper and lower feed rollers 22 and 20 after the debris 11b has been peeled off the web 9, the upper feed roller 22 and the lower feed roller 20 hold the label tape 8 therebetween and rotate to further transport the label tape 8. Once the debris 11b has been peeled off the web 9, the debris 11b will not adhere to the web again even though the upper feed roller 22 and the lower feed roller 20 hold the label tape 8 therebetween in a sandwiched relation.

The upstream and downstream feed roller pairs are rotatably supported on a frame (not shown), and are driven in rotation by a drive source, e.g., a motor so that the upstream and downstream feed roller pairs cooperate with each other to transport the label tape 8 in accordance with the control commands from the controller.

An upper roller assembly 30 and a lower roller assembly 33 are disposed between the upstream and downstream feed roller pairs. A mark detector 26 is located under the lower guide 25 immediately upstream of the lower roller assembly 33.

The upper roller assembly 30 is rotatably supported on a side frame (not shown) above the upper guide 24, and is mechanically coupled to the upstream feed roller pair and the downstream feed roller pair, so that the upper roller assembly 30 rotates in synchronism with the upstream and downstream feed roller pairs.

The lower roller assembly 33 is rotatably supported on a side frame (not shown) under the lower guide 25, and is mechanically coupled to a drive mechanism different from that of the upper roller assembly 30, so that the lower roller assembly 33 rotates independently of the upper roller assembly 33. The upper roller assembly 30 and the lower roller assembly 33 have their rotational axes that lie in the same vertical plane.

The mark detector 26 detects a black marker line 12, which is printed on a side of the web 9 opposite the labels 10 and indicates the position of the information printed on a corresponding label 10. The detection signal of the mark detector 26 is sent to the controller, and is used to controllably drive the pre-separation mechanism 19. The mark detector 26 may be disposed at any location as long as it is located upstream of the lower roller assembly 33, and downstream of the label printer 1.

Figs. 8A and 8B illustrate the configuration of the label tape 8. Fig. 8C is a cross-sectional view taken along lines 8C-8C of Fig. 8A. Fig. 8A is a top view of the label tape 8. Fig. 8B is a side view of the label tape 8 when the label tape 8 has been partially paid out. Referring to Fig. 8C, the label tape 8 includes the web 9, labels 10, an adhesive coating 15, and the debris or residue 11. The label tape 8 is paid out in a direction shown by arrow H. As shown in Fig. 8C, the label material is half cut at boundaries 13, which surround each label 10, into the labels 10 and the debris 11 surrounding the labels 10, so that the labels 10 and the debris 11 still adhere to the web 9 but the labels 10 can be separated from the web 9 without difficulty at a later stage. Thus, the debris 11 can be peeled off from the web 9 while the labels 10 remain releasably adhered to the web 9.

The mark line 12 is printed in a projected area, which is defined by projecting the label 10 onto a side of the web 9 opposite the label 10. The mark line 12 is in the vicinity of the trailing end of the label 10 with respect to the advance direction C of the label tape 8. The mark line 12 indicates a position where the information is printed on the label 10.

Referring to Fig. 7A, the upper roller assembly 30 includes an upper roller shaft 31 rotatably supported on the side frame (not shown), and an elastic member 32 that covers the circumferential surface of the upper roller assembly 30. The elastic member 32 is formed of, for example, sponge.

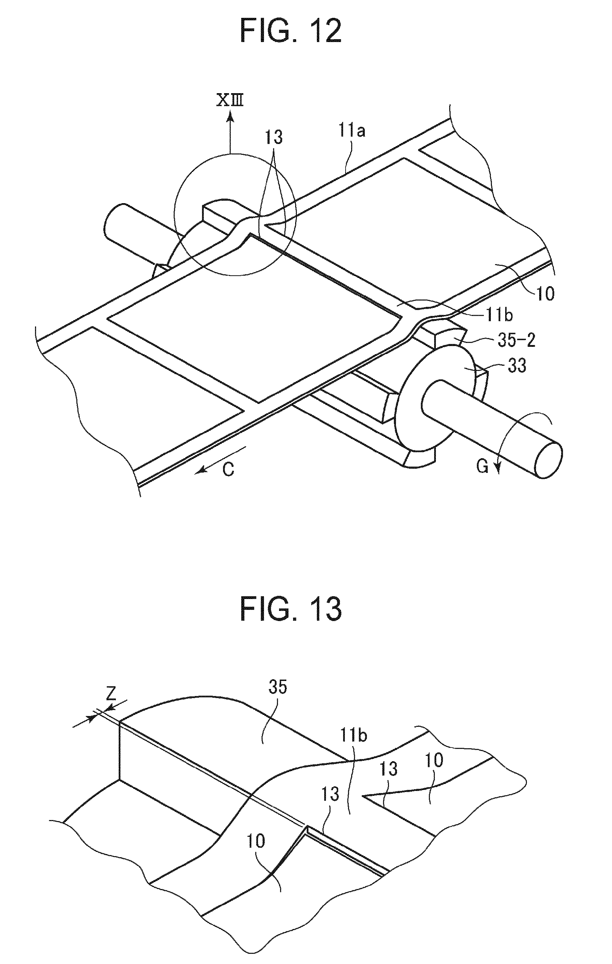

The lower roller assembly 33 includes a slit disc 28, a lower roller shaft 34, and four elastic members 35. The slit disc 28 has four slits 29 angularly equally spaced by 90°, the slits radially extending and having an identical shape. Each of the elastic members 35 has a cross-section in the shape of an annulus sector, and extends in a direction parallel to the lower roller shaft 34 (Fig. 12), and a leading edge 35a and a trailing edge 35b with respect to the rotation of the lower roller assembly 33. Annulus sector is a shape (Fig. 7B) that has a center *C,* the opening angle θ, and the radii 0<r<R of the two circular arcs bounding it. The elastic members 35 are formed of, for example, a rubber material.

The slits 29 are angularly equally spaced such that each slit is shifted by 90° in phase relative to the elastic member 35. In other words, each slit 29 is positioned angularly in the middle of adjacent elastic members 35.

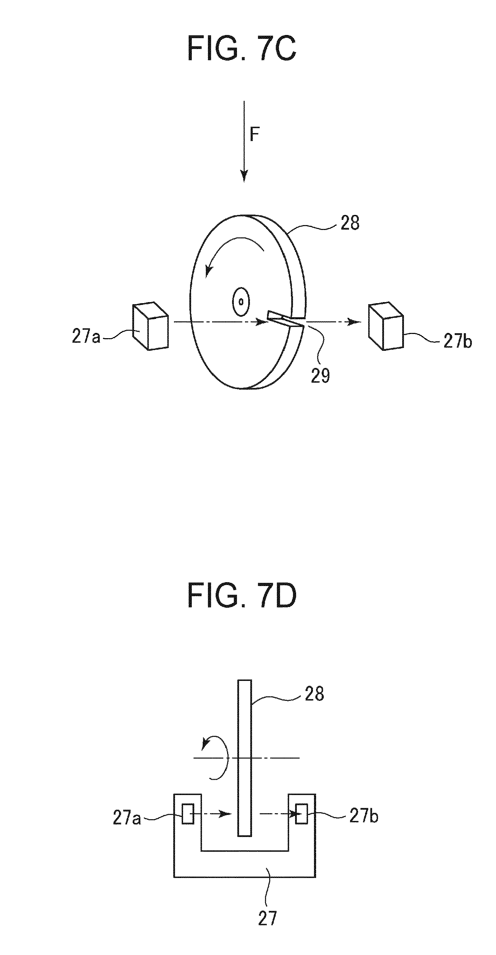

Fig. 7C is a perspective view of the slit disc 28 and a slit detector 27. Fig. 7D is a top view as seen in a direction shown by arrow F in Fig. 7C. The slit detector 27 is mounted on a frame (not shown), and includes a light source 27a and a light receiving section 27b. The slit detector 27 detects the slits 29 formed in the slit disc 28 when the slit disc 28 rotates. The detection signal of the slit detector 27 is sent to the controller over a cable. In response to the detection signal, the controller sends a command to stop the rotation of the lower roller assembly 33.

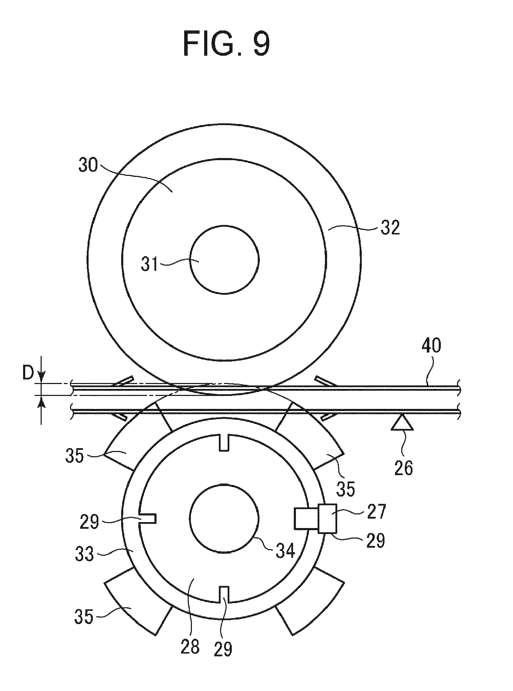

Fig. 9 illustrates the positional relationship between the upper roller assembly 30 and the lower roller assembly 33 when the mark line 12 has not been detected by the mark detector 26 yet.

The elastic member 35 of the lower roller assembly 33 has a hardness of A and the elastic member 32 of the upper roller assembly 30 has a hardness of B. The hardness are selected such that A is greater than B.

When the upper and lower roller assemblies 30 and 33 rotate, the elastic member 35 is brought into contact with the elastic member 32 of the upper roller assembly 30, so that the elastic member 35 is pushed or dug into the elastic member 32. Reference character D denotes an amount of dig by which the elastic member 35 is pushed into the elastic member 32 (Fig. 9).

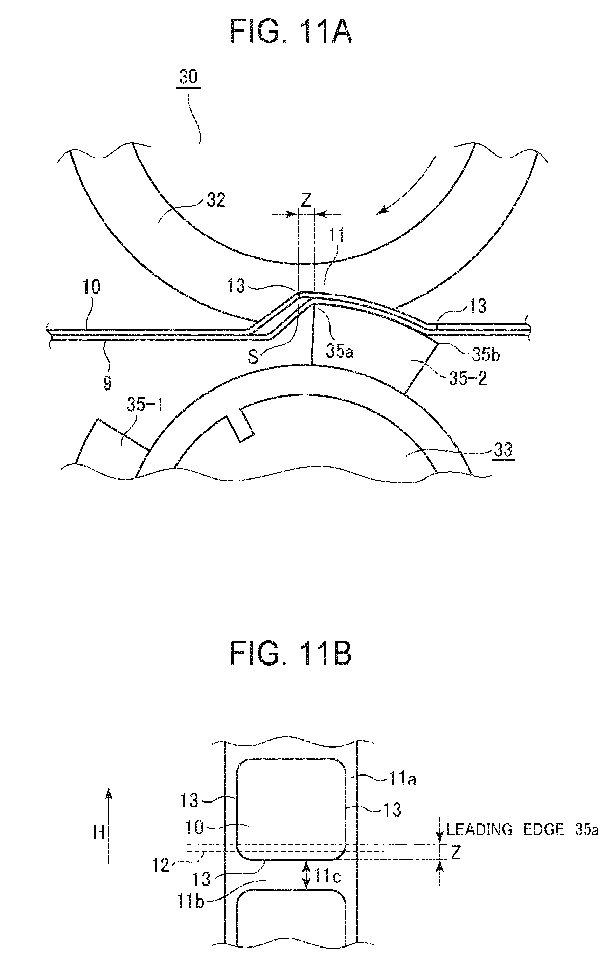

When the elastic member 35 digs strongly into the elastic member 32, the label 10 is pushed downward by the elastic member 32 while the label tape 8 is pushed upward by the leading edge 35a (Fig. 11A) of the circumferential surface of the elastic member 35. This causes the debris 11b to separate from the web 9, creating a small area S (Fig. 11B) between the debris 11b and the web 9. As a result, the debris 11 in the vicinity of the half cut line 13 is detached from the web 9. The circumferential dimension of the elastic member 35 should be at least as long as the width of the debris 11b.

The post-separator 2 is located downstream of the pre-separation mechanism 19, and receives the label tape 8 whose debris 11 has been detached from the web 9 in the vicinity of the half cut line 13. The post-separator 2 separates the debris 11 from the web 9, leaving only the labels 10 adhered to the web 9.

Referring to Figs. 2 and 6, a guide roller 6 receives the label tape 8, and cooperates with a separator bar 7 to separate the debris 11 from the web 9. The guide roller 6 and the separator bar 7 are rotatably supported on a frame (not shown), and are configured to rotate freely. The debris 11 is then wound on a debris take-up spool 5. The web 9 on which the labels 10 remain attached is further advanced by the guide roller 6 and is wound on a web take-up spool 3, which is at a downstream end of the label advance direction. The web take-up spool 3 includes flanges 4 that are disposed at longitudinal end portions of the web take-up spool and guide the web 9 so that the web 9 is wound on the web stake-up pool 3 smoothly without misalignment. The web take-up spool 3 and the debris take-up spool 5 are driven in synchronism by a drive mechanism (bot shown).

### {Operation}

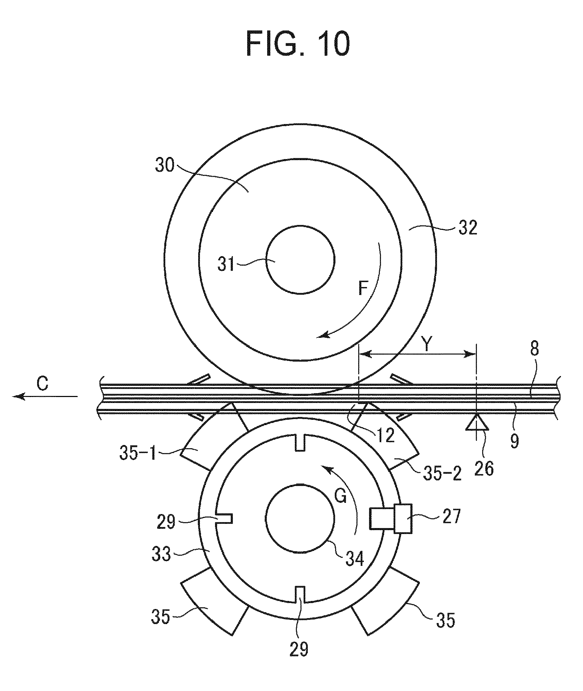

The operation of the label printing system 100 will be described in detail with reference to Figs. 10-13.

Figs. 7A-7D and 10-13 illustrate the operation of the pre-separation mechanism 19.

The label printer 1 prints on the labels 10 of the label tape 8. The label tape 8 is then paid out through the exit 14 into the label path 36 defined by the upper guide 24 and the lower guide 25.

The label tape 8 is transported by the upstream feed roller pair constituted of the upper and lower feed rollers 23 and 21, which rotate at a circumferential speed equivalent to the speed at which the label tape 8 is paid out. The label tape 8 enters the pre-separation mechanism 19 defined between the upper roller assembly 30 and the lower roller assembly 33.

The upper roller assembly 30 is mechanically coupled to the upstream roller pair and the downstream roller pair. Thus, the upper roller assembly 30 rotates in synchronism with the upstream and downstream roller pairs. On the other hand, the lower roller assembly 33 is not mechanically coupled to the upstream and downstream roller pairs. Therefore, the lower roller assembly 33 in Fig. 9 is at rest.

When the lower roller assembly 33 is at rest, the four elastic members 35 slightly extend into the label path 36 or are completely out of the label path 36. At this moment, the leading edge 35a of the elastic member 35-2 may or may not come in slight contact with the back surface of the web 9, so that the elastic member 35-2 will not interfere with the label tape 8 that advances through the label path 36.

Referring to Fig. 9, the mark detector 26 detects the black mark line 12 printed on the back side of the web 9, and sends the detection signal to the controller upon detection of the mark line 12.

The label tape 8 is further advanced a distance Y (Fig. 10) for a short period of time *t* shortly after detection of the mark line 12. At the end of the short period of time *t*, the controller drives the lower roller assembly 33 into rotation.

It is desirable that the lower roller assembly 33 starts to rotate when the mark line 12 arrives substantially at the leading edge 35a of the elastic member 35-2. The distance Y (Fig. 10) may be selected in accordance with the dimension L (Fig. 8A) of the label 10 extending in the advance direction of the label tape 8.

As shown in Fig. 11A and 11B, the elastic member 35 comes into rolling pressure contact with the elastic member 32 of the upper roller assembly 30, and then digs into the elastic member 32.

Figs. 12 and 13 illustrate the elastic members 32 and 35 when the elastic member 35 is pushed into the elastic member 32. Fig. 13 is an expanded view of a pertinent portion in the vicinity of the half cut line 13.

Referring to Fig. 13, when the elastic member 35 is pushed into the elastic member 32, the elastic member 35 and elastic member 32 are positioned relative to each other such that the half cut line 13 is a distance Z downstream of the leading edge 35a of the elastic member 35. Referring back to Figs. 11A and 11B, the distance Z is a distance between the leading edge 35a and the half cut line 13.

When the label tape 8 is sandwiched between the elastic member 32 and the elastic member 35, the debris 11 sits on the circumferential surface of the elastic member 35 while the label 10 and web 9 is pressed downward by the elastic member 32 at an area immediately downstream of the leading edge 35a of the elastic member 35 with respect to the advance direction of the label tape 8. Therefore, the debris 11 is separated from the web 9 at the half cut line 3. In this manner, portions 11b of the debris 11, which would otherwise make unpleasant sounds at the post-separator 2, are separated from the web 9 before the label tape 8 arrives at the post-separator 2.

The upper and lower feed roller pairs continue to rotate so that the label tape 8 further advances as shown in Fig. 10. When the slit 29 passes the sensor 27, the sensor 27 detects the slit 29 and sends the detection signal to the controller. In response to the detection signal, the controller drives the drive mechanism to stop the rotation of the lower roller assembly 33, so that the lower roller assembly 33 comes to rest.

As described above, the operation of the pre-separation mechanism 19 illustrated in Figs. 9, 11A and 11B is repeated for each debris portion 11b, so that the debris portions 11b are detached from the web 9 before label tape 8 arrives at the post-separator 2.

The post-separator 2 receives the label tape 8 whose debris portions 11b have been detached, and removes only the entire debris 11 is from the web 9, leaving only the labels 10 on the web 9.

Pre-separating the debris portions 11b, which extends in a direction perpendicular to the direction in which the label tape 8 advances, provides smooth, quiet debris-separating operation at the post-separator 2, reducing unpleasant noise or sounds as well as preventing cutting off of the debris 11 in the middle of the removal operation of the debris 11 at the post separator 2.

### {Modifications}

The present invention is not limited to the above-described embodiment, and may be modified in a variety of ways. For example, the present invention may be applied to an apparatus configured to partially separate the leading edge portions of the labels on a label tape whose debris have been completely removed, so that the labels can be easily separated from the web of the label tape when the label is actually affixed to a product at a later stage.

The four elastic members 35 have been described as having a cross section in the shape of an annulus sector, and the corner of the leading edge 35a of the elastic member 35 pushes up the label material in the vicinity of the half cut line 13. Alternatively, the number of the elastic members 35 may be increased as long as the corner of the leading edge 35a pushes up the label material in the vicinity of the half cut line 13.

The sensor 27 has been described as detecting the slit 29 to stop the rotation of the lower roller assembly 33. Alternatively, the sensor 27 may be configured to detect other type of mark e.g., a line instead of the slit 29, as long as the mark properly indicates a position or timing to stop the lower roller assembly 33 and is detected reliably.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. A debris separator for pre-separating debris from a label tape (8), the label tape including a carrier web (9) and a label material releasably adhered to the carrier web by an adhesive, the label material being half cut into labels and debris (11) that surround all around individual label (10), the separator comprising:
a transport path (36) through which the label tape (8) is transported;
a first rotatable body disposed in the transport path (36) and extending in a first longitudinal direction thereof;
a first elastic member (32) that covers the first rotatable body, the first elastic member including a first circumferential surface rotatable in contact with a surface of the label material;
a second rotatable body disposed in the transport path (36) and extending in a second longitudinal direction thereof parallel to the first longitudinal direction;
a plurality of second elastic members (35) angularly disposed on the second rotatable body, each of the second elastic members including a second circumferential surface rotatable in contact with a side of the carrier web (9) opposite the labels (10); and
a controller configured to control the first rotatable body and the second rotatable body;
wherein, when in use, the first and second rotatable bodies rotate with the label tape (8) sandwiched between the first circumferential surface and the second circumferential surface, the second circumferential surface digging into the first circumferential surface, so that the first circumferential surface pushes back the debris to detach the debris at least partially from the web.

2. The debris separator according to claim 1, wherein the second circumferential surface is a circumferential surface of an annulus sector, wherein the debris separator further comprises:
a plurality of angularly spaced first marks; and
a first detector (27) configured to detect the first marks and output a first detection signal.

3. The debris separator according to claim 1 further comprising:
a second detector (26) configured to detect a second mark on the label tape (8) and output a second detection signal;
wherein the controller drives the second rotatable body into rotation when the label tape (8) has advanced a distance (Y) after the second detector outputs the second detection signal.

4. The debris separator according to claim 2 or claim 3, wherein the controller causes the second rotatable body to stop rotation thereof in response to the first detection signal.

5. The debris separator according to any one of claims 1 to 4, wherein the second elastic member (35) has a higher hardness than the first elastic member (32).

6. The debris separator according to claim 2, wherein each of the first marks is located between adjacent ones of the second elastic members.

7. The debris separator according to claim 6, wherein the plurality of second elastic members include four second elastic members angularly equally spaced, and four first marks are shifted by 45 degrees in phase relative to the four second elastic members.
